(19) Europäisches Patentamt
European Patent Office
Office européen des brevets

(11) **EP 3 882 101 B1**

(12) **EUROPEAN PATENT SPECIFICATION**

(45) Date of publication and mention
of the grant of the patent:
**28.02.2024 Bulletin 2024/09**

(21) Application number: **19884253.6**

(22) Date of filing: **14.11.2019**

(51) International Patent Classification (IPC):
*B61B 5/02* (2006.01)    *B61B 13/00* (2006.01)
*B65G 15/44* (2006.01)    *B65G 21/22* (2006.01)
*B65G 17/02* (2006.01)    *B65G 21/04* (2006.01)
*B65G 15/06* (2006.01)    *B65G 15/08* (2006.01)

(52) Cooperative Patent Classification (CPC):
**B61B 13/00; B65G 15/06; B65G 15/08;
B65G 17/02; B65G 21/04**

(86) International application number:
**PCT/BY2019/000016**

(87) International publication number:
**WO 2020/097713 (22.05.2020 Gazette 2020/21)**

(54) **LOAD TRANSPORTATION SYSTEM WITH CIRCULAR TRAFFIC**

LASTTRANSPORTSYSTEM MIT RUNDVERKEHR

COMPLEXE DE TRANSPORT DE CHARGE À DÉPLACEMENT SUR ROUES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.11.2018 EA 201900038**

(43) Date of publication of application:
**22.09.2021 Bulletin 2021/38**

(73) Proprietor: **Unitsky, Anatoli Eduardovich
222838, Minsk region, Pukhovichi district (BY)**

(72) Inventor: **Unitsky, Anatoli Eduardovich
222838, Minsk region, Pukhovichi district (BY)**

(74) Representative: **Winter, Brandl - Partnerschaft
mbB
Alois-Steinecker-Straße 22
85354 Freising (DE)**

(56) References cited:
**BE-A- 523 815**        **DE-C1- 3 504 995**
**GB-A- 291 917**        **RU-C1- 2 061 608**
**RU-C2- 2 250 189**     **RU-C2- 2 520 983**
**US-A1- 2013 118 371**  **US-A1- 2013 146 427**

## Description

## Technical field

The invention relates to cargo transport systems with circular traffic, incorporating rail track structure, suitable for use as long-haul conveying machine for continuous haulage of lumpy and bulky goods, in particular - to move rock from a mine or deposit over extended distances. "Rock" in this case means all loose (non-cohesive) material to be removed from the mine (quarry) and includes both overburden and minerals (ore) and dead rock.

## Background Art

A belt conveyor is known, comprising a middle frame consisting of runs with posts, whereby conveyor belt endlessly closed on drive and tension drums with support of the load-carrying branch of the belt on grooved roller supports with varying geometry [1].

The disadvantage of the known conveyor is the increased energy intensity of transportation of bulky loads and the increased wear intensity of the conveyor belt when it interacts with roller supports which form the transverse profile of the belt of increased grooving, especially when transporting bulky cargo.

A transport system is also known, which includes a rail track made of hollow rails of cylindrical shape, the radius of which is less than the radius of curvature of the concave rim of the moving unit' wheel contacting therewith, whereby a prestressed longitudinal element is located inside the rail. Rails and wheel rim in the given technical solution are made with definite ratio between radius of curvature of concave surface of wheel rim and radius of outer surface of cylindrical rail. The space between the inner walls of the rail and the longitudinal element may be filled with a material which expands upon solidification [2].

The disadvantage of this track structure is its relatively high cost when used in transfer devices for transporting goods over short distances.

Currently, cable-belt conveyors have become widespread. Their advantages are: large length in single flight, long service life of the belt; low coefficient of resistance to movement; lower specific energy consumption and metal capacity of the linear part compared to belt conveyors. Cable-belt conveyors can compete successfully with belt conveyors at capacity of 500-3000 t/hour and long transportation distances.

For example, a cable-belt conveyor is known, which includes a frame, loading and unloading devices, a conveyor belt endlessly closed in vertical plane on the drums, two flexible elements endlessly closed on drive, tensioning and deflector pulleys in the form of traction-carrying wire cables of circular cross section configured to have the conveyor belt resting on the sides thereof, as well as disc rollers configured to have cables resting thereon [3].

The disadvantages of the known conveyor are the complexity of design, caused by separate closure of belt and cable loops and significant quantity of deflector pulleys for traction cables, presence of complex tension systems for traction cables, restriction of cross-sectional area of transported load due to insignificant deflection of conveyor belt in span between the traction cables, which reduces carrying capacity of the belt and productivity of the conveyor.

Known as prototype is the conveyor of cable-belt type by Doppelmayr company, equipped with a flat conveyor belt with corrugated sides, running along the track structure above the terrain on high supports located at distances of up to 1500 m. Cross beams are mounted in the flat conveyor belt, at the ends of which there are load-carrying traveling wheels with side flanges that control the position of the conveyor belt on the carrying track structure. Each section (upper and lower) of conveyor belt is supported by rollers on track structure, as which track cables are used. The belt performs a traction function. Supports located in places where soil subsidence is possible are provided on adjustable cable stays. By unfolding the belt after the cross-delivery drum by $180^0$, where the unloaded belt is turned by the empty side upwards and returned to the supports along the line, contamination of the track is prevented. Drives are located only at loading and unloading stations [4].

US2013/118371A1 discloses a transport complex according to the preamble of claim 1.

However, the prior art does not make full use of the technical solution in the field of increasing traction, which in this embodiment is limited by strength of the conveyor belt. For this reason, due to the frictional nature of the transfer of operating force from the drive drums to the conveyor belt, premature wear thereof occurs. The presence of additional corrugated sides significantly increases the cost of the most vulnerable element of the design - conveyor belt. The design of the drives and their arrangement limit the performance and efficiency of the transport system as a whole.

The conditions of work in quarries and mines also pose significant constraints to the widespread use of such conveyors. As known, such operating conditions are accompanied by the formation of large amount of dust and dirt, which, mixing with water, enters the mechanisms and covers all the equipment in the mine with a layer of dust and dirt. The mixture of dust and dirt with water is actually a natural and very effective lubricant. When such a mixture enters the conveyor belt, the efficiency of the drums moving the belt is noticeably reduced, which leads to a significant decrease in productivity, as well as reliability and durability of the transport complex, with drastic limitation on the distance of cargo movement at single flight of the track structure.

At the core of the claimed invention lies the task of tackling the following technical tasks:

- increasing reliability and durability of operation of transport complex;
- increasing length and rigidity of the flight section of track structure from loading to unloading;
- ensuring increased productivity of transport complex.

**Summary of invention**

The required technical tasks and desired aims of the present invention are achieved by using cargo transport complex according to claim 1, by Yunitski with circular traffic, incorporating carcass with track structure, equipped with loading zones and unloading zones, as well as turnaround nodes; body formed by carrying belt portion, strengthened by reinforcing elements and transverse axles, evenly distributed and fastened along the length of body, equipped on both sides with wheels; and drive mechanism, connected with body, whereby track structure includes rail cords, consisting of longitudinally prestressed load-bearing members of rail cords and body with rolling surface for wheels, whereas carrying belt portion of body includes longitudinally positioned load-bearing member of body, prestressed by applying axial stretching force $F$, N, defined by the ratio:

$$0,05 \leq F/F_0 \leq 0,75,$$

where $F_0$, H, - tear force of carrying belt portion of body,

wherein drive mechanism is configured to interact with traction devices positioned on body, connected with load-bearing member of body, as well as supporting beams, having fluted section and spaced at distance $L$, m, whereby values of ratios between depth $H$, m, of fluted section, width $S$, m, of carrying belt portion and distance $L$, m, of spacing of supporting beams, are defined by the dependencies:

$$0,05 \leq H/S \leq 0,75,$$

$$0,1 \leq S/L \leq 1,$$

whereas turnaround nodes are embodied with radius $R$, m, defined by the ratio:

$$2 \leq R/L \leq 100,$$

wherein rail cords on turnaround node are embodied with sloping section, responsible for slope of body in transverse direction at angle $\gamma$, °, within the limits:

$$45 \leq \gamma \leq 120,$$

whereby forces acting on body during its motion have total force, directed to tangent to rolling surfaces of rail cords in cross section of track structure at angle $\alpha$, °, within limits:

$$0 \leq \alpha \leq 85,$$

whereas unloading zone is located on sloped section of turnaround node of track structure.

The technical task is achieved also thanks to the fact that in front of unloading zone, rail cords are embodied with counter-slope in direction, opposite to unloading vector, at angle $\beta$, °, within limits:

$$5 \leq \beta \leq 30$$

The specified result is also attained thanks to the fact that supporting beam represents wheelset axle.
Same is achieved under condition that carrying belt portion is embodied multi-layer.
Same technical result is also achieved thanks to the fact that, at least one layer of carrying belt portion is equipped with reinforcing elements.
The specified result is further attained thanks to the following advantageous solutions:

- at least, on the side of loading surface of carrying belt portion, at least one of its layers with reinforcing elements is embodied in the form of cushion gasket;
- longitudinally positioned load-bearing member of body is embodied in the form of longitudinally positioned load-bearing elements, transversally connected with each other;
- at least, in one layer of carrying belt portion, as reinforcing elements, load-bearing elements are positioned;
- drive mechanism is embodied as bearing frame with drive unit installed thereon and connected to engine;
- drive unit is equipped with drive device with traction hooks installed thereon and configured to adjust drive force.

According to technical requirements, it is expedient that wheels have double flange profile or single flange profile.
It is expedient that protective housing is fastened above track structure.

**Brief description of drawings**

The invention is clarified through the drawings in Fig. 1-Fig. 14, which illustrate the following:

Fig.1 - schematic view of track structure of cargo transport complex by Yunitski with circular traffic - general view (embodiment);

Fig.2 - schematic view of fragment of body motion on turnaround node in unloading zone (embodiment);

Fig.3 - schematic view of fragment of body (embodiment);

Fig.4 - schematic view of cross section of body (embodiment);

Fig.5 - schematic view of cross section of body with supporting beam in the form of wheelset axle (embodiment);

Fig.6 - schematic view of wheelsets distribution along rail cord of track structure (embodiment);

Fig.7 - schematic view of drive mechanism (fragment);

Fig.8 - schematic view of cross section of carrying belt portion of body (embodiment);

Fig.9 - schematic view of cross section of wheel (embodiment);

Fig.10 - schematic view of cross section of rail cord (embodiment);

Fig.11, Fig.12 and Fig.13 - schematic view of wheelsets (embodiments);

Fig. 14 - schematic view of distribution of forces during motion of loaded body along the track structure.

Items on drawings:

1 - carcass;
2 - track structure;
3 - body;
4 - drive mechanism;
5 - carrying belt portion;
6 - reinforcing element;
7 - transverse axle;
8 - wheel;
9 - wheelset;
10 - rail cord;
11 - load-bearing member (of rail cord);
11.1 - load-bearing element (of load-bearing member of rail cord);
12 - extended hollow encasing (of rail cord);
13 - hardening material;
14 - cargo;
15 - longitudinally positioned load-bearing member (of body);
15.1 - longitudinally positioned load-bearing element (of load-bearing member of body);
16 - traction device;
17 - drive device;
18 - traction hook;
19 - piston boss;
20 - supporting beam;
A - loading zone;
B - unloading zone;
C - turnaround node;
E - rolling surface;
$L$, m, - distance of positioning of supporting beams;

$H$, m, - depth of fluted section;
$S$, m, - width of carrying belt portion;
$R$, m, - radius of turnaround node;
$R_1$, m, - radius of curvature of wheel rolling surface;
$R_0$, m, - radius of curvature of rail cord rolling surface;
$h$, m, - height of wheel flange;
$V$, m³, - volume of body of rail cord void of load-bearing elements;
$P$, N, - drive force;
$G$, N, - weight of body;
$Ru$, N, - elastic force;
$Rz$, N, - supporting force;
$Ra$, N, - centrifugal force;
$T$, N, - total force;
$\gamma$, °, - slope angle of rail cord on turnaround node;
$\alpha$, °, - slope angle of total force to tangent to rolling surfaces of rail cords;
$\varphi$, °, - slope angle of inner surface of wheel flange to rolling surface of rail cord;
$\beta$, °, - counter-slope angle of rail cord before unloading zone.

**Embodiments of invention**

The claimed invention is further presented in a closer detail.

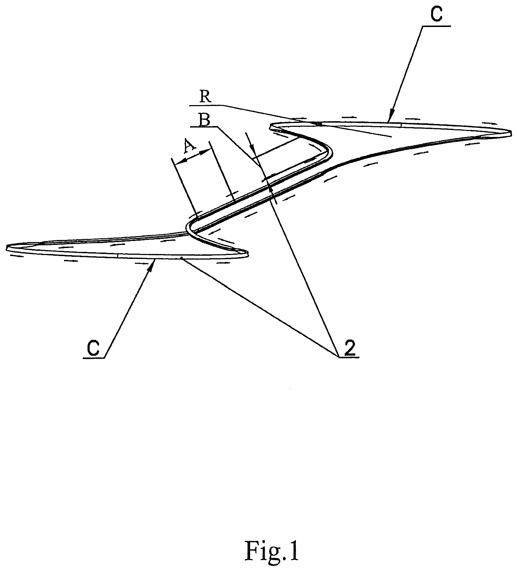

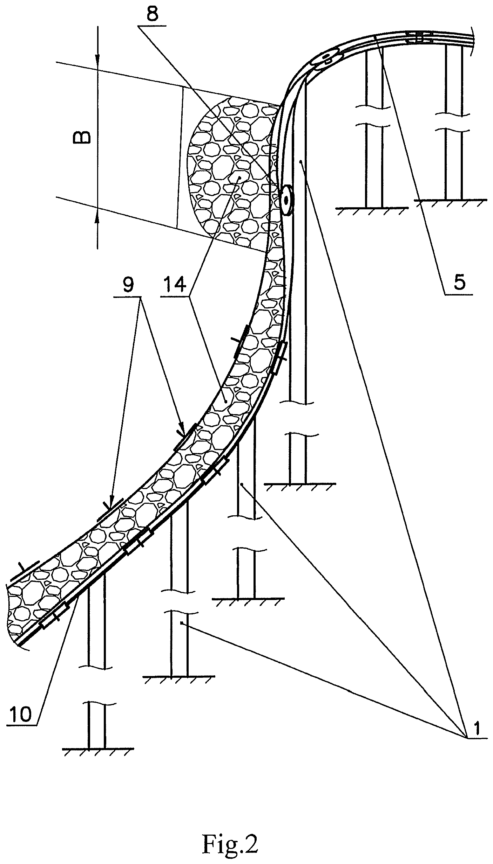

The claimed cargo transport complex by Yunitski with circular traffic (see Figs.1 and 2) incorporates carcass 1 with track structure 2, equipped with loading zones $A$ and unloading zones $B$, as well as turnaround nodes $C$, body 3 and drive mechanism 4, connected with body 3.

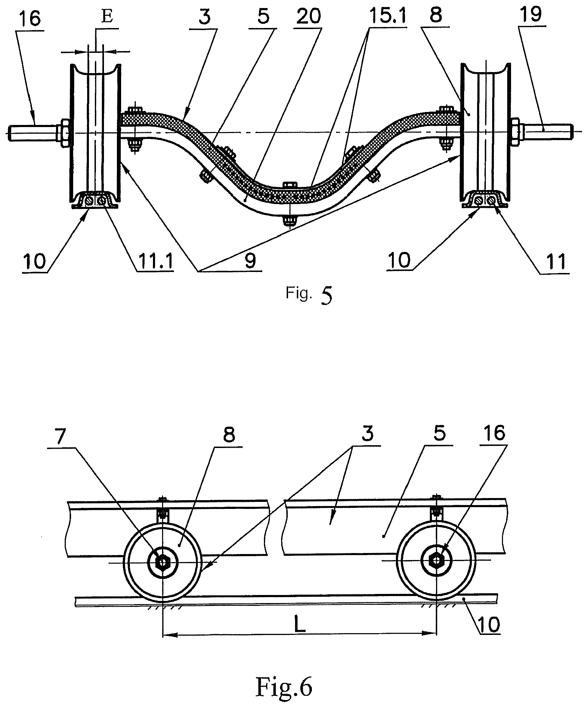

Body 3 is formed by carrying belt 5 portion, strengthened by reinforcing elements 6 and transverse axles 7, evenly distributed and fastened along the length of body 3, equipped on both sides by wheels 8 forming wheelsets 9 (see Figs.2 - 8).

Carcass 1 with track structure 2, depending on the terrain, design parameters and technical feasibility, may have various implementations, for example, in the form of steel and reinforced concrete columnar and/or frame structures with various known embodiments of prestressed track structure, and, for example, can be made of overpass type with prestressed truss track structure 2.

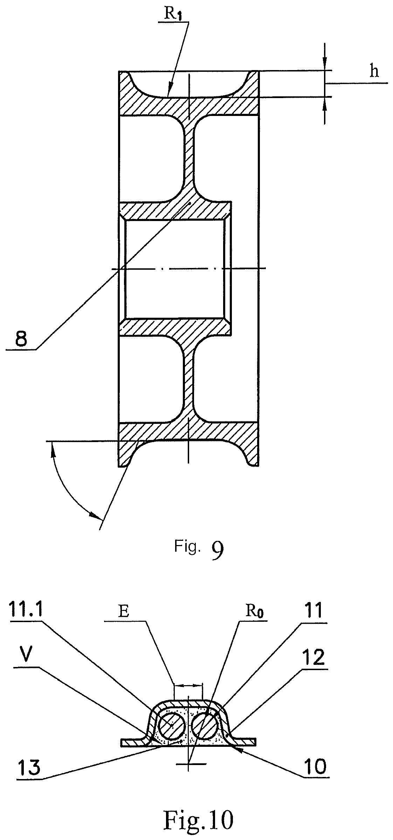

Track structure 2 includes rail cords 10, consisting of longitudinally prestressed load-bearing members 11 and body 12 with rolling surface $E$ for wheels 8 (see Figs.9 and 10).

Hereby, load-bearing members 11 of rail cords 10 are embodied as longitudinally prestressed load-bearing elements 11.1, that, as a rule, are positioned in bodies 12, which, in turn, are embodied hollow and extended, wherein volume $V$, m³, void of load-bearing elements 11.1, is filled with hardening material 13.

In accordance with any non-limiting variants of application of hardening material 13, as such, depending on design option, compounds based on polymer composite binders, cement mixtures (see Fig. 10) and/or analogous hardening materials are used.

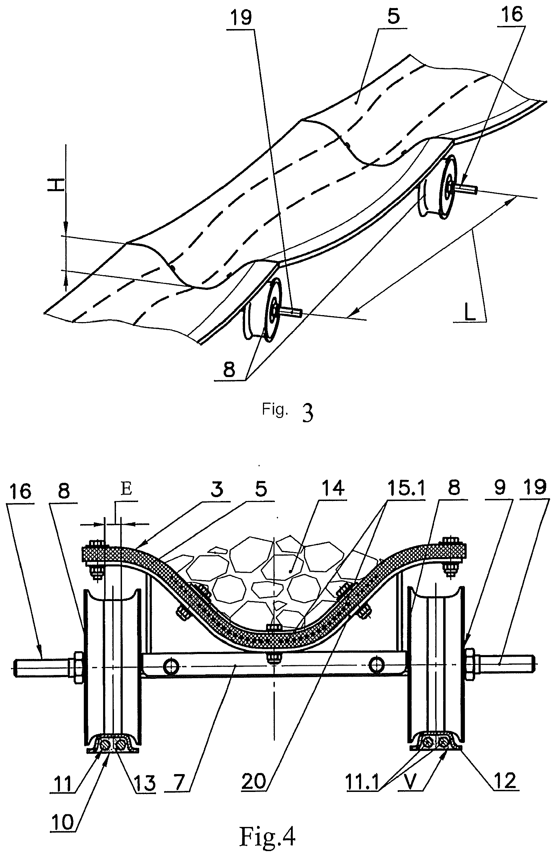

As a result, grouting of rail cords 10 of track structure 2, is performed, enabling transfer and redistribution of external loads and forces on all load-bearing elements 11.1 of rail cords 10, which allows to significantly increase bending stiffness, flatness and straightness of extended hollow body 12 of rail cord 10 (see Figs.4, 5, 10 and 11) and track structure 2 as a whole.

With such embodiment, extended hollow body 12 is made with rolling surface $E$ for wheels 8 mated therewith.

Additionally, body-free variant of practical implementation of rail cord 10 (not shown on figures), which in this case represents prestressed extended load-bearing structure, consisting of one or several longitudinally prestressed load-bearing members 11.

Embodiment of load-bearing structure 2 of cargo transport complex on the basis of rail cords 10 longitudinally prestressed load-bearing members 11 allows to achieve substantial advantages as compared to traditional technical solutions.

Use for track structure 2 of rail cords 10 with innovative modification - in the form of longitudinally prestressed structure - allows to ensure the straightness of rail cords 10, increase the carrying capacity of track structure 2, and, therefore, the productivity of the entire complex with decrease in total material consumption and, practically, an unlimited cargo 14 transportation leg in one flight of track structure 2 from its loading zone $A$ to unloading zone $B$.

Body 3 and, particularly, it's carrying belt 5 portion, similar to rail cords 10, comprises longitudinally positioned load-bearing member 15, representing one of major elements of body 3, and can be embodied as longitudinally positioned load-bearing elements 15.1, transversely connected with each other.

Carrying belt 5 portion, longitudinally positioned load-bearing member 15 and transverse axles 7, equipped on both sides with wheels 8 and forming wheelsets 9, interconnected into whole, - body 3, which is positioned on rolling surface $E$ and interacts through it with longitudinally prestressed rail cords 10 of track structure 2.

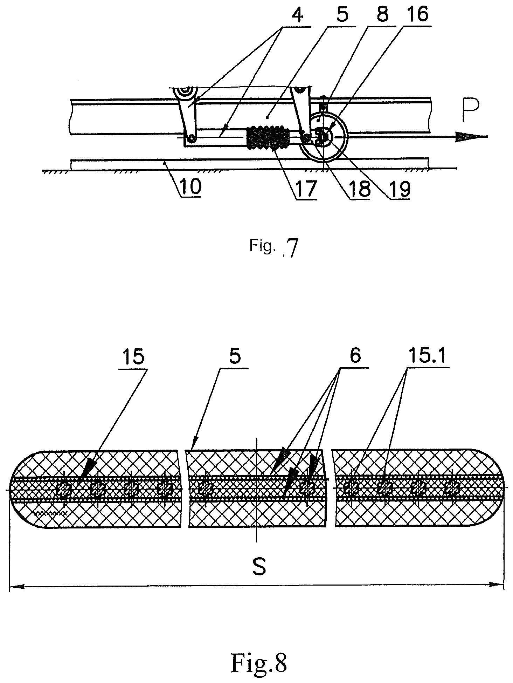

Longitudinally positioned load-bearing member 15 may be connected with help of any known means and methods with both carrying belt 5 portion, and wheelset 9 of body 3. Thus, longitudinally positioned load-bearing member 15 may be vulcanized (see Fig.8) into carrying belt 5 portion (into its different layers and sections), as well as positioned, for example, in corresponding slot and/or opening in carrying belt 5 portion and fastened therein by any known clamping device (not shown on figures). Carrying belt 5 portion may only rest upon, for instance, lay on two longitudinally positioned load-bearing members 15, located on each side thereof, or longitudinally positioned load-bearing member 15 may be connected with carrying belt 5 portion via built-in embedded parts (not shown on figures).

In the same manner, longitudinally positioned load-bearing member 15 of body 3 may be embodied in the form of longitudinally positioned load-bearing elements 15.1, transversely connected with each other.

In such manner, longitudinally positioned load-bearing member 15 takes up drive force $P$, N, from drive mechanism 4 through traction devices 16, performed on body 3 and connected with longitudinally positioned load-bearing member 15 (see Figs.4, 5 and 8). As a result - drive force $P$, N, from drive mechanism 4, is evenly distributed along the entire length of body 3.

Hereby, longitudinally positioned load-bearing member 15 of carrying belt 5 portion of body 3 is prestressed by applying axial stretching force $F$, N, defined by the ratio:

$$0{,}05 \le F/F_0 \le 0{,}75 \qquad (1)$$

where $F_0$, N, - tear force of carrying belt 5 portion of body 3.

The specified values of ratio (1) define the optimal range of axial stretching force of longitudinally positioned load-bearing member 15 of body 3 and allow without any significant difficulties to ensure operational characteristics of its carrying belt 5 portion, responsible for forming of optimum profile of body 3 and its required process-related clamping to rail cord 10 of track structure 2. As a result - design capacity and dynamics of cargo 14 unloading are secured.

If the ratio (1) is less than 0,05, then it will be impossible to ensure the forming of body 3 of required shape and rigidity, which leads to losses of cargo 14 during its transportation.

If the ratio (1) is more than 0,75, then the likelihood of occurrence of overstresses on carrying belt 5 portion of body 3, in particular, - on side edges of body 3 on turnaround nodes $C$, which leads to penalized reliability and durability of body 3 and excessive increase in the material capacity of carcass 1 of the entire transport complex.

According to any non-limiting embodiments of the proposed cargo transport complex, load-bearing members 11 and 15, correspondingly, of rail cords 10 and body 3, as mentioned above, are one of major elements of track structure 2 and body 3.

The said load-bearing members 11 and 15, according to technical feasibility, can be made in the form of corresponding, longitudinally prestressed load-bearing elements 11.1 and 15.1, joined in one load-bearing structure, embodied as twisted, and/or non-twisted ropes, cables, wires, bands and/or other extended elements made of any durable materials.

In any non-limiting embodiments of the claimed cargo transport complex by Yunitski with circular traffic on carcass 1 with track structure 2, installed is at least one drive mechanism 4, connected with body 3 via interaction with traction devices 16, performed on body 3 and taking up drive force $P$, N. (see Fig.7).

Increase in quantity of drive mechanisms 4, installed on transport complex, allows to increase the capacity and haulage of cargo 14 with one flight of transport complex.

Drive mechanism 4, depending on design option, may have any embodiment selected from the known, ensuring transmission of drive force $P$, N, onto traction devices 16.

Thus, for instance, drive mechanism 4 may be embodied as separate node in the form of bearing frame mounted on carcass 1, with drive unit installed thereon and connected to engine (not shown on figures).

The drive of drive mechanism 4 is provided by any of the known types of engines with corresponding transmission and drive to the drive unit.

Variant of embodiment of fragment of drive mechanism 4, allowing to understand the principle of its operation, is given on Fig.7.

Drive unit of drive mechanism 4 is equipped with drive device 17 with traction hooks 18 installed thereupon configured to adjust drive force $P$, N (see Fig.7).

Traction hooks 18 of drive device 17 of drive mechanism 4 are installed with possibility to move along track structure 2 and simultaneous interaction with traction devices 16.

It is expedient that traction devices 16, taking up drive force $P$, N, to be located uniformly along the longitudinal edges of body 3. This will ensure uniformity of distribution of drive force $P$, N, in any cross section of body 3 and absence therein, on leg between loading zones $A$ and unloading zones $B$ of cargo 14, of idler shearing stresses, that will ensure the safety of cargo 14 during its transportation.

Justifiably obvious choice for positioning of traction devices 16, taking up drive force $P$, N, is wheelset 9. Hereby, traction devices 16 may be embodied as any known structural elements, conducting transmission of motion along the specified trajectory from one object to another. As such, for instance, piston bosses 19 on transverse axles 7 of wheelset 9 of body 3, ensuring interaction of wheelset 9 with body 3 on the whole with traction devices 18 of drive mechanism 4.

It is expedient that traction devices 16, simultaneously taking up drive force $P$, N, be positioned, at least on two wheelsets 9. This will guarantee formation of the required working tension in carrying belt 5 portion of body 3, as well as smooth and efficient operation of the entire cargo transport complex.

Alternative variant of embodiment of cargo transport complex is positioning along track structure 2 of several inter-coordinated drive mechanisms 4 (not shown on figures). This allows to considerable degree to increase the length and rigidity of flight of track structure 2 from loading zone $A$ to unloading zone $B$ up to hundred kilometers and more.

Hereby, body 3, formed by carrying belt 5 portion, equipped with reinforcing elements 6 and evenly distributed and fastened along the length of body 3 transverse axles 7 in the form of wheelsets 9, also contains supporting beams 20, which may be embodied as transverse axles 7 of wheelsets 9. An important feature is that profile of body 3 is formed by supporting beams 20, and/or cargo 14, and/or longitudinally positioned load-bearing members 15, which is a considerable advantage as regards relatively known technical solutions and allows to form a highly stable body due to elasticity of longitudinally positioned load-bearing member due to elasticity of longitudinally positioned load-bearing member 15 of body 3, prestressed by axial stretching force $F$, N.

For profile of body 3 to be formed, it is expedient that supporting beams 20 have fluted section and spaced at distance $L$, m, (see Figs.3 - 7 and 11), wherein values of ratios of depth $H$, m, of fluted section, width $S$, m, of carrying belt 5 portion and distance $L$, m, of spacing supporting beams 20 are defined by the dependencies:

$$0{,}05 \leq H/S \leq 0{,}75, \qquad (2)$$

$$0{,}1 \leq S/L \leq 1 \qquad (3)$$

With embodiment of profile of body 3 of fluted section with depth $H$, m, of profile and width $S$, m, of carrying belt 5 portion thereof with values, corresponding to ratio (2), it becomes quite easy to ensure the required form of body 3.

If the ratio (2) is less than 0,05, το secure the design capacity of cargo 14 transportation, a carrying belt 5 portion of considerable width $S$, m, will be required, which will lead to substantial increase in the cost of both separate elements and the transport complex as a whole.

If the ratio (2) is more than 0,75, the occurrence of unacceptable loss of cargo 14 during its transportation is observed.

Specified in the ratio (3) values of width $S$, m, of carrying belt 5 portion and distance $L$, m, of spacing supporting beams 20, define the optimal range of those dimensions.

If the ratio (3) is less than 0,1, then productivity of transport complex is penalized.

If the ratio (3) is more than 1, then costs rise significantly and unreasonably due to an increase in the material capacity of the total number of wheelsets 9 of body 3 of transport complex.

To ensure reliable and durable operation of the transport complex, it is advisable that turnaround node $C$ of track structure 2 will have radius $R$, m, (see Fig.1), defined by the dependence:

$$2 \leq R/L \leq 100 \qquad (4)$$

With embodiment of turnaround node $C$ of track structure 2 per radius R, m, it is easy to optimize technical parameters and material capacity, and, therefore, the cost of track structure 2.

If the ratio (4) is less than 2, then to secure strength on turnaround node *C* of carcass 1 of track structure 2, significant costs will be required to increase strength of all its elements, including foundations and constituent structural members.

If the ratio (4) is more than 100, then turnaround node *C* will occupy a significant territory and, as a result, material capacity of carcass 1 of track structure 2 in this section of the transport complex will unreasonably increase.

For high performance and automation of the unloading process, it is advisable that track structure 2 on turnaround node *C* will be configured with option for body 3 to slope in cross direction (see Figs. 1 and 2) at angle $\gamma,°$, within limits:

$$45 \leq \gamma \leq 120 \qquad (5)$$

With embodiment of track structure 2 on turnaround node *C* with possibility of body 3 to slope in cross direction at angle $\gamma,°$, it becomes possible to optimally organize the unloading process.

If the value of angle $\gamma,°$, specified in limits (5), is less than 45, cargo 14 is not fully unloaded in the designated unloading zone *B*, resulting in loss of cargo 14.

If the value of angle $\gamma,°$, specified in limits (5), is more than 120, then in order to ensure the reliability of transport complex operation and to prevent the occurrence of detachment of wheels 8 of wheelsets 9 from rail cords 10 on turnaround node *C*, a significant increase in axial stretching force *F*, N, of load-bearing member 15 of body 3 will be required, which, in turn, leads to unjustified and significant increase in the cost and material capacity of the entire transport complex.

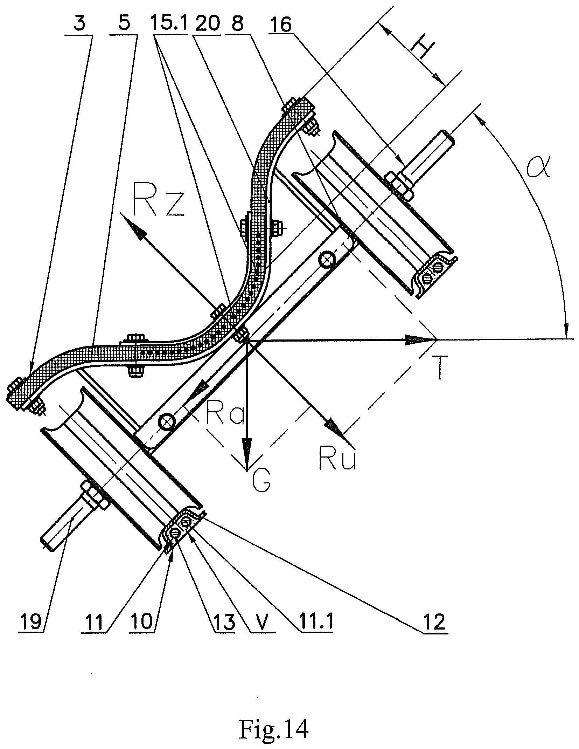

Body 3 should be configured in such way, that forces, acting thereupon during motion process, will form total force *T*, N, to tangent to rolling surfaces *E* of rail cords 10 in cross section of track structure 2 (see Fig. 14) at angle $\alpha,°$, within limits:

$$0 \leq \alpha \leq 85 \qquad (6)$$

If the value of angle $\alpha,°$, specified in limits (6), is less than 0, to secure the required vector of total force *T*, N, a significant increase in axial stretching force F, N, of load-bearing member 15 of body 3 will be required, which, as mentioned above, leads to unjustified and significant increase in the cost and material capacity of the entire transport complex.

If the value of angle $\alpha,°$, specified in limits (6), is more than 85, then possibility of detachment and/or derailment of wheelsets 9 of body 3 from rail cords 10 will likely happen, which is impermissible.

The arrangement of unloading zone *B* on the sloping section of turnaround node *C* of track structure 2 allows to achieve significant advantages over the known technical solutions. For example, said embodiment of the proposed cargo transport complex provides motion of body 3 along rail cords 10 of track structure 2 in reverse direction in working position, which allows the revers e leg of track structure 2 to be used for the oncoming transportation of required cargos (not shown on figures).

Additionally, the mentioned embodiment of carcass 1 and rail cords 10 of track structure 2 is highly versatile and allows for alternative use thereof for transportation of various cargoes using autonomous mounted and/or suspended cargo vehicles (not shown on figures), made in the form of, for example, wagons, which will expand technical and technological possibilities of using load-bearing structures of the proposed transport complex.

To reduce power loads on carcass 1 and track structure 2 of the transport complex, it is expedient to position unloading zone *B* on sloping section of turnaround node *C* of track structure 2 in such way that, before unloading zone *B*, rail cords 10 be embodied with counter-slope in direction opposite to unloading vector (see Fig.2), at angle $\beta,°$, within limits:

$$5 \leq \beta \leq 30 \qquad (7)$$

Embodiment of angle $\beta,°$, of counter-slope of rail cords 10 before unloading zone B within specified limits (7), makes it easy to compensate for the effect of lateral shear load caused by centrifugal force *Ra*, N, which allows to increase stability of body 3 on rail cords 10 of track structure 2 and reduce wear of wheels 8 of wheelsets 9 of body 3 and rail cords 10.

If the value of angle $\beta,°$, specified in limits (7), is less than 5, then, as tests of transport complex showed, it is impossible to significantly compensate for the effect of lateral shear load caused by centrifugal force *Ra*, N, on wheelsets 9 of body 3, as a result of which there is intense wear of wheels 8 and rail cords 10.

If the value of angle $\beta,°$, specified in limits (7), is more than 30, then unexpected and unacceptable losses of cargo 14 outside unloading zone *B* are possible.

Carrying belt 5 portion of body 3 is embodied multi-layer. This allows to increase its reliability, strength and improve performance.

Hereby, at least one of its layers is provided with reinforcing elements 6.

Additionally, at least, on the side of loading surface of carrying belt 5 portion of body 3, at least, one of its layers with reinforcing elements 6 (see Fig.8) is embodied in the form of cushion gasket.

It is expedient, that longitudinally positioned load-bearing member 15 of carrying belt 5 portion of body 3 is embodied in the form of longitudinally positioned load-bearing elements 15.1, transversally connected with each other.

Positioning, at least, in one layer of carrying belt 5 portion of body 3, as reinforcing elements 6, load-bearing elements 15.1 allows, along with the above technical features of manufacturing of carrying belt 5 portion of body 3, to secure the required performance characteristics and structural parameters of body 3 of the proposed transport complex.

As alternative embodiments of wheelset 9 of body 3, wheels 8 have double flange profile (see Fig.9).

Hereby, in some embodiments, wheels 8 may have single flange profile.

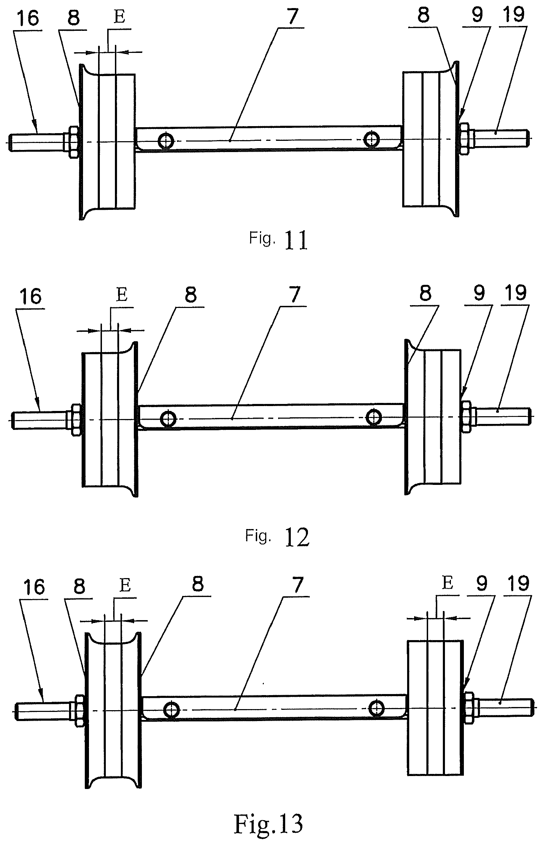

With such design option, in some embodiments, on wheelset 9 with wheels 8 with single flange profile, the flanges are performed on outer side of each wheel 8 (see Fig. 11).

Alternatively, on wheelset 9 with wheels 8 of single flange profile, flanges may be performed on inner surface of each wheel 8 (see Fig.12).

Technical objectives are also achieved thanks to the fact that wheels 8 of wheelset 9 have different profiles (see Fig. 13).

Depending on design option, one wheel 8 of wheelset 9 may have double flange profile, and the other - single flange profile.

Alternatively, one wheel 8 of wheelset 9 may have double flange profile, and the other - flangeless profile.

Optimization of rolling parameters of wheelsets 9 of body 3 on rail cords 10 is achieved thanks to radius $R_1$, m, of curvature of rolling surface $E$ of wheel 8 in limits, defined by the ratio:

$$0,01 \leq (R_1 - R_0)/R_0 \leq 1, \quad (8)$$

where $R_0$ - radius of curvature of rolling surface $E$ of rolling surface of rail cord 10.

Embodiment of radius $R_1$, m, of curvature of rolling surface $E$ of wheel 8 in limits of values, specified in the ratio (8), allows to optimize rolling process of wheelsets 9 of body 3 along the rail cords 10.

If the ratio (8) is less than 0,01, then area of contact surface "wheel - rail cord" will be sufficiently large and cambered, which will increase rolling friction and increased wear of wheels 8 and rail cords 10.

If the ratio (8) will be less than 1, then contact area will be very small, which will lead to high contact stresses and increased local wear and tear of contacting surfaces of wheels 8 and rail cords 10. Moreover, if this ratio increases, it may be that wheel 8 becomes "excessively large", whereas rail cord 10 - very "thin", hence, losing its bearing capacity.

Stability and anti-derailment of body 3 depends to a large extent on the design features of flanges of wheels 8. In particular, significant role is played by height $h$, m, of wheel 8 flange and angle $\varphi$, °, of slope of inner surface of wheel flange to plane of rolling surface $E$.

In any variant of embodiments of body 3 on wheelsets 9, equipped with wheels 8 with flanges, it is expedient that flange of wheel 8 will have height $h$, m, defined by the ratio:

$$0,1 \leq h/R_0 \leq 1 \qquad (9)$$

If the ratio (9) is less than 0,1, then flange will not be capable to guarantee anti-derailment requirements to wheelsets 9 of body 3 on turnaround node $C$.

If the ratio (9) is more than 1, then the structure of carcass 1 of track structure 2 is significantly complicated, especially - mount assemblies of rail cords 10 on carcass 1.

Depending on design option, angle $\varphi$, °, of slope of inner surface of wheel flange to plane of rolling surface $E$ of rail cords 10 is within limits:

$$60 \leq \varphi \leq 85 \qquad (10)$$

If the ratio (10) is less than 60, then, as empirically obtained data showed, it is not possible to ensure reliability of anti-derailment effect for wheelsets 9 of body 3 on turnaround nodes $C$.

If the ratio (10) is more than 85, then, as was revealed during the tests of transport complex, there are increased friction and intense wear in contact couple "wheel-rail", which negatively affects the efficiency of track structure 2.

Common criterion for all embodiments of wheels 8 is requirement to ensure stability of body 3 on rail cords 10 of track structure 2 and to prevent body 3 from coming off rail cords 10 during operation of transport complex.

This requirement is met for various non-exclusive combinations of all the above-mentioned variants and parameters of embodiments of wheels 8 and wheelsets 9 of body 3 and rail cords 10 of track structure 2.

In alternative embodiments, profile of body 3 may be formed by supporting beams 20, and/or cargo 14, and/or load-bearing elements 15.1, thereby optimizing the costs of manufacturing of transport complex and transporting cargo 14.

To increase efficiency of transport complex operation and reduce influence of atmospheric phenomena on transportation of cargo 14, it is advisable to fasten protective housing (not shown on figures) on carcass 1 above track structure 2.

**Industrial applicability**

The proposed cargo transport complex with circular traffic is realized in the following manner.

In accordance with design decision, carcass 1 is embodied, on which track structure 2 is mounted. Herein, track structure 2 is embodied in the form of rail cords 10, comprising longitudinally prestressed load-bearing members 11 of those rails cords 10 with rolling surface *E* for wheels 8. Use in structure of rail cords 10 of above said modification - prepared as per string technology - guarantees the required straightness, strength and rigidity of track structure 2.

After that, on rail cords 10, body 3 is positioned. On rolling surface *E* of rail cords 10, body 3 is mounted with wheels 8 of wheelsets 9, whereby body 3, similar to rail cords 10, as well represents a structure, prestressed by action of defined axial stretching force, which sort of compresses around rail cords 10 along the entire length of track structure 2, which gives the entire system increased stability, reliability and rigidity. By virtue of the fact that profile of body 3 is formed by supporting beams 20, and/or cargo 14, and/or longitudinally arranged load-bearing members 15, it is possible to provide a highly stable body 3 with the required capacity and efficiency, which is a significant advantage with respect to the prior art.

Hereby, body 3, formed by carrying belt 5 portion, equipped with reinforcing elements 6 and evenly distributed and fastened along the length of body 3 transverse axles 7 in the form of wheelsets 9, also contains supporting beams 20, which may be embodied as transverse axles 7 of wheelsets 9. Crucial feature is that profile of body 3 is formed by supporting beams 20, and/or cargo 14, and/or longitudinally arranged load-bearing members 15, which is pivotal in providing a highly stable body 3 thanks to elasticity of longitudinally positioned load-bearing member 15, embodied by prestressing axial stretching force *F*, N, and represents a significant advantage with respect to the prior art.

On the section of carcass 1, stipulated by design decision, at least, one drive mechanism 4 is installed, connected with body 3 via interaction with traction devices 16, embodied on body 3 and taking up drive force *P*, N.

Drive mechanism 4 is embodied, for example, in the form of bearing frame with drive unit installed thereon and connected to engine, and equipped with drive device 17 with traction hooks 18 installed thereon and configured to adjust drive force *P,* N. Hereby, traction hooks 18 of drive device 17 of drive mechanism 4 are installed with possibility to move along track structure 2 and simultaneous interaction with traction devices 16.

Loading and unloading terminals (not shown on figures) are realized in places provided for by the design decision.

The proposed cargo transport complex by Yunitski with circular traffic operates in the following manner.

Carcass 1 of cargo transport complex can be placed both directly along profile of route, and on supports installed on foundation (not shown on figures).

In accordance with design decision, track structure 2, equipped with loading zones *A* and unloading zones *B,* as well as turnaround nodes *C*, is mounted on carcass 1. At the same time, rail cords 10 of track structure 2 are performed prestressed, which allows ensuring the required flatness, rigidity and carrying capacity of track structure 2. Body 3 is arranged on rail cords 10 with wheelsets 9. Thanks to the fact that body 3 is formed by carrying belt 5 portion equipped with reinforcing elements 6, and contains prestressed, longitudinally positioned load-bearing member 15, the required compression and abutment of body 3 to rolling surface *E* of rail cords 10 is achieved throughout track structure 2. At the same time, fixation of load-bearing elements 15.1 of load-bearing member 15 of carrying belt 5 portion on support beams 20, made with fluted section and spaced along carrying belt 5 portion with distance *L*, m, makes it possible to form the required profile of body 3.

Under action of drive mechanism 4, which is arranged in interaction of drive device 17 and traction hooks 18, installed thereon configured to adjust drive force P, N, with traction devices 16 installed on body 3, connected with load-bearing member 15, body 3 is forced to move and cargo 14 is transported. At the same time, load-bearing member 15 takes up translational power load from drive force P, N, which is converted in wheelsets 9 into rotation of wheels 8 of body 3.

Drive force *P*, N, in proposed technical approach, is transmitted not via friction forces, but by kinematic engagement of traction hooks 18 with traction devices 16, which allows to transmit substantial force, limited only by strength of load-bearing member 15 and drastically increase length of section of flight of track structure 2 from loading to unloading, with increased efficiency of transport complex.

The proposed cargo transport complex in loading zone *A*, may be equipped, for example, by hopper (not shown on figures), wherefrom cargo 14 is evenly loaded into body 3. Cargo 14 can be loaded into body 3 through hopper by various known methods, for example by dump trucks, directly from the deposit (by rotary excavators), or from the crushing plant, or by other methods.

Thanks to the feature that on turnaround node C, in unloading zone *B*, rail cords 10 of track structure 2 are sloped at defined angle $\gamma$,°, securing transverse slope of body 3 relative to the direction of its motion, in continuous mode, in process of motion of body 3 along rail cords 10 of track structure 2, automatic unloading of body 3 in the specified zone takes place.

Embodiment, in accordance with cited in the materials of present application, of values of such parameters of transport complex as: radius R, m, of turnaround node C; radius $R_1$, m, of curvature of rolling surface *E* of wheel 8; radius $R_0$, m, of curvature of rolling surface *E* of rail cord 10; height *h*, m, of wheel 8 flange; angle $\gamma$, °, of slope of rail cords on turnaround node *C*; angle $\varphi$, °, of slope of inner surface of wheel 8 flange to rolling surface *E* of rail cords 10; angle $\beta$,°, of counter-slope of rail cord before unloading zone; slope angle $\alpha$, °, of total force *T*, N, to tangent to rolling surfaces *E* of rail cords 10; initial axial stretching force *F*, N, of load-bearing member 15 of body 3; width *S*, m, of carrying belt 5 portion of body 3; distance *L,* m, of positioning of supporting beams 20 and depth *H*, m, of fluted section of supporting beams 20, - ensures serviceability of the proposed cargo transport complex and achievement of the specified technical goals.

Application of string technologies in the proposed cargo transport complex and selection of optimal design parameters make it possible to reduce specific resistance to movement and achieve the value of specific energy consumption up to 0,023 kW×h/t×km, and also, to reduce the cost of transporting lumps and bulk cargoes 14 to 0,6 cents/t×km, which is 4-5 times less compared to alternative transport systems and 8-12 times less compared to rail transport.

In addition, if transportation comes from a mountainous region towards coast or to the area below development, then at a distance of 500 km, a total height difference of 1,500 meters is enough so that the complex does not consume electricity at all for transporting cargo 14, using only the recuperated potential energy of cargo 14 descending from the mountains, which is especially relevant for untapped regions of the planet. An important aspect is the absence of environmental problems associated with the construction and operation of the proposed cargo transport complex.

While the present application describes preferred embodiments of the structure, it is clear that the invention is not limited thereto only and can be implemented using other known structural elements within the scope of the appended claims.

Cargo transport complex by Yunitski with circular traffic of the described structure allows creating a high-tech cargo transport system with a string-type rail track structure and having improved operational characteristics while reducing its cost and increasing productivity and durability.

Information sources

1. Polunin V.T., Gulenko G.N. Conveyors for mining enterprises. M.: Nedra, 1978, p.62-63, fig.2.13.

2. Patent granted in Russian Federation 2211890 IPC B61B3/02,5/00,13/04; E01B25/00, publ.10.09. 2003г.

3. Spivakovskiy A.O., Dyachkov V.K. Transporting machines. M.: Mashinostroenie, 1983, p. 158-159, fig.4.47.

4. Webpage: https://studbooks.net/563066/geografiya/osnovnye_tehnologi cheskie_resheniya_oborudovanie - as of 28.08.2018.

**Claims**

1. Cargo transport complex with circular traffic, incorporating a carcass (1) with a track structure (2), supplemented by loading and unloading zones (A, B), as well as turnaround nodes (C), a body (3), formed by a carrying belt portion (5), strengthened by reinforcing elements (6) and transverse axles (7) evenly distributed and fastened along the length of the body (3), equipped with wheelsets (9) on both sides, and a drive mechanism (4), connected with the body (3), *characterized in that* the track structure (2) includes rail cords (10), consisting of longitudinally prestressed load-bearing members (11) of rail cords (10) and a body (12) with rolling surface (E) for wheels (8), whereas the carrying belt portion (5) of the body (3) includes a longitudinally positioned load-bearing member (15) of the body (3), prestressed by applying axial stretching force *F*, N, defined by the ratio:

$$0,05 \leq F/F_0 \leq 0,75,$$

where $F_0$, N, - tear force of the carrying belt portion (5) of the body (3), wherein the drive mechanism (4) is configured to interact with traction devices (16) positioned on the body (3), connected with the load-bearing member of the body, as well as supporting beams (20), having a fluted section and spaced at distance *L*, m, whereby values of ratios between depth *H,* m, of fluted section, width *S*, m, of the carrying belt portion (5) and distance *L*, m, of positioning of the supporting beams (20), are defined by the dependencies:

$$0,05 \leq H/S \leq 0,75,$$

$$0,1 \leq S/L \leq 1,$$

and turnaround nodes (C) having radius R, m, defined by the ratio:

$$2 \leq R/L \leq 100,$$

wherein the rail cords (10) on turnaround node are embodied with a sloping section, responsible for slope of body in transverse direction at angle $\gamma$, °, within the limits: $45 \leq \gamma \leq 120$.

2. Transport complex according to claim 1, *characterized in that* forces acting on body during its motion have total force, directed to tangent to rolling surfaces (E) of rail cords (10) in cross section of track structure at angle $\alpha$, °, within limits:

$$0 \le \alpha \le 85$$

3. Transport complex according to claim 1, *characterized in that* unloading zone (B) is located on sloped section of turnaround node of track structure.

4. Transport complex according to claim 1, *characterized in that* in front of unloading zone, rail cords (10) are embodied with counter-slope in direction, opposite to unloading vector, at angle $\beta$, °, within limits:

$$5 \le \beta \le 30$$

5. Transport complex according to claim 1, *characterized in that* supporting beam (20) represents wheelset axle.

6. Transport complex according to claim 1, *characterized in that* carrying belt portion (5) is embodied multi-layer.

7. Transport complex according to any of claims 1 and 6, *characterized in that* at least one layer of carrying belt portion (5) is equipped with reinforcing elements.

8. Transport complex according to any of claims 1, 6 and 7, *characterized in that*, at least, on the side of loading surface of carrying belt portion (5), at least, one of its layers with reinforcing elements is embodied in the form of cushion gasket.

9. Transport complex according to claim 1, *characterized in that* longitudinally positioned load-bearing member (11) of body is embodied in the form of longitudinally positioned load-bearing elements, transversally connected with each other.

10. Transport complex according to any of claims 1, 6, 7 and 9, *characterized in that*, at least, in one layer of carrying belt portion (5), as reinforcing elements, load-bearing elements are positioned.

11. Transport complex according to claim 1, *characterized in that* wheels (8) have double flange profile or single flange profile.

12. Transport complex according to claim 1, *characterized in that* drive mechanism (4) is embodied as bearing frame with drive unit installed thereon.

13. Transport complex according to claim 12, *characterized in that* drive unit is equipped with drive device (17) with traction hooks installed thereon and configured to adjust drive force.

14. Transport complex according to claim 1, *character-*

*ized in that* protective housing is fastened above track structure (2).

**Patentansprüche**

1. Frachttransportkomplex mit einem kreisförmigen Verkehr, der eine Karkasse (1) mit einer Gleisstruktur (2), die durch Lade- und Entladezonen (A, B) sowie Wendeknoten (C) ergänzt ist, einen Körper (3), der durch einen Tragriemenabschnitt (5) gebildet ist, der durch Verstärkungselemente (6) und Querachsen (7) verstärkt ist, die gleichmäßig entlang der Länge des Körpers (3) verteilt und befestigt sind, der mit Radsätzen (9) auf beiden Seiten ausgestattet ist, und einen Antriebsmechanismus (4), der mit dem Körper (3) verbunden ist, enthält, **dadurch gekennzeichnet, dass** die Gleisstruktur (2) Schienenseile (10), die aus in Längsrichtung vorgespannten Tragegliedern (11) von Schienenseilen (10) bestehen, und einen Körper (12) mit Rollfläche (E) für Räder (8) enthält, während der Tragriemenabschnitt (5) des Körpers (3) ein in Längsrichtung positioniertes Trageglied (15) des Körpers (3) enthält, das durch Aufbringen einer axialen Dehnungskraft F [N] vorgespannt ist, die durch das Verhältnis definiert ist:

$$0{,}05 \le F/F_0 \le 0{,}75,$$

wobei $F_0$ [N] eine Reißkraft des Tragriemenabschnitts (5) des Körpers (3) ist,
wobei der Antriebsmechanismus (4) konfiguriert ist, um mit auf dem Körper (3) positionierten Zugkraftvorrichtungen (16), die mit dem Trageglied des Körpers verbunden sind, sowie Stützbalken (20), die einen geriffelten Querschnitt haben und in einem Abstand L [m] beabstandet sind, zusammenzuwirken, wobei Werte von Verhältnissen zwischen der Tiefe H [m] des geriffelten Querschnitts, der Breite S [m] des Tragriemenabschnitts (5) und dem Abstand L [m] eines Positionierens der Stützbalken (20) durch die Abhängigkeiten definiert sind:

$$0{,}05 \le H/S \le 0{,}75,$$

$$0{,}1 \le S/L \le 1,$$

und Wendeknoten (C) mit einem Radius R [m], definiert durch das Verhältnis:

$$2 \le R/L \le 100,$$

wobei die Schienenseile (10) auf einem Wendeknoten mit einem geneigten Abschnitt ausgeführt sind, der für eine Neigung des Körpers in Querrichtung mit einem Winkel γ [°] innerhalb der Grenzen verantwortlich ist: 45 ≤ γ ≤ 120.

2. Transportkomplex nach Anspruch 1, **dadurch gekennzeichnet, dass** Kräfte, die auf den Körper während dessen Bewegung wirken, eine Gesamtkraft haben, die zu der Tangente der Rollflächen (E) der Schienenseile (10) im Querschnitt der Gleisstruktur mit einem Winkel α [°] innerhalb der Grenzen gerichtet ist:

$$0 ≤ α ≤ 85$$

3. Transportkomplex nach Anspruch 1, **dadurch gekennzeichnet, dass** sich die Entladezone (B) auf einem geneigten Abschnitt des Wendeknotens der Gleisstruktur befindet.

4. Transportkomplex nach Anspruch 1, **dadurch gekennzeichnet, dass** vor der Entladezone Schienenseile (10) mit einer Gegenneigung in Richtung entgegengesetzt zum Entladevektor mit einem Winkel β [°] innerhalb der Grenzen ausgeführt sind:

$$5 ≤ β ≤ 30$$

5. Transportkomplex nach Anspruch 1, **dadurch gekennzeichnet, dass** der Stützbalken (20) eine Radsatzachse repräsentiert.

6. Transportkomplex nach Anspruch 1, **dadurch gekennzeichnet, dass** der Tragriemenabschnitt (5) mehrschichtig ausgeführt ist.

7. Transportkomplex nach einem der Ansprüche 1 und 6, **dadurch gekennzeichnet, dass** mindestens eine Schicht des Tragriemenabschnitts (5) mit Verstärkungselementen ausgestattet ist.

8. Transportkomplex nach einem der Ansprüche 1, 6 und 7, **dadurch gekennzeichnet, dass** mindestens auf der Seite der Ladefläche des Tragriemenabschnitts (5) mindestens eine seiner Schichten mit Verstärkungselementen in Form einer Polsterdichtung ausgeführt ist.

9. Transportkomplex nach Anspruch 1, **dadurch gekennzeichnet, dass** das in Längsrichtung positionierte lasttragende Glied (11) des Körpers in Form von in Längsrichtung positionierten lasttragenden Elementen, die in Querrichtung miteinander verbunden sind, ausgeführt ist.

10. Transportkomplex nach einem der Ansprüche 1, 6, 7 und 9, **dadurch gekennzeichnet, dass** mindestens in einer Schicht des Tragriemenabschnitts (5) als Verstärkungselemente lasttragende Elemente positioniert sind.

11. Transportkomplex nach Anspruch 1, **dadurch gekennzeichnet, dass** die Räder (8) ein Doppelflankenprofil oder ein Einzelflankenprofil aufweisen.

12. Transportkomplex nach Anspruch 1, **dadurch gekennzeichnet, dass** der Antriebsmechanismus (4) als Lagerrahmen mit einer darauf installierten Antriebseinheit ausgeführt ist.

13. Transportkomplex nach Anspruch 12, **dadurch gekennzeichnet, dass** die Antriebseinheit mit einer Antriebsvorrichtung (17) mit Zughaken, die darauf installiert sind und konfiguriert sind, um eine Antriebskraft einzustellen, ausgestattet ist.

14. Transportkomplex nach Anspruch 1, **dadurch gekennzeichnet, dass** ein Schutzgehäuse über der Gleisstruktur (2) befestigt ist.

**Revendications**

1. Complexe de transport de marchandises à circulation en boucle, intégrant une armature (1) avec une structure de voie (2), complétée par des zones de chargement et de déchargement (A, B), ainsi que des noeuds de retour (C), une carrosserie (3), formée d'une partie de bande porteuse (5), renforcée par des éléments de renfort (6) et des axes transversaux (7) uniformément répartis et fixés sur la longueur de la carrosserie (3), équipés d'essieux montés (9) des deux côtés, et un mécanisme d'entraînement (4), relié à la carrosserie (3), *caractérisé en ce que* la structure de voie (2) inclut des carcasses de rail (10), consistant en des organes porte-charge précontraints longitudinalement (11) de carcasses de rail (10) et un corps (12) avec une surface de roulement (E) pour les roues (8), tandis que la partie de bande porteuse (5) de la carrosserie (3) inclut un organe porte-charge positionné longitudinalement (15) de la carrosserie (3), précontraint par application d'une force d'étirement axial F, N, définie par le rapport :

$$0,05 ≤ F/F_0 ≤ 0,75,$$

où $F_0$, N, est la force de déchirure de la partie de bande porteuse (5) de la carrosserie (3), dans lequel le mécanisme d'entraînement (4) est configuré pour interagir avec des dispositifs de traction (16) positionnés sur la carrosserie (3), reliés à l'organe porte-charge de la carrosserie, ainsi qu'avec des poutres porteuses (20), présentant une section cannelée et espacées d'une distance *L, m*, selon lequel des valeurs de rapports entre la profondeur *H, m*, de la section cannelée, la largeur *S, m*, de la partie de bande porteuse (5) et la distance *L, m*, de positionnement des poutres porteuses (20), sont définies par les dépendances :

$$0{,}05 \leq H/S \leq 0{,}75,$$

$$0{,}1 \leq S/L \leq 1,$$

et des noeuds de retour (C) présentant un rayon *R, m*, défini par le rapport :

$$2 \leq R/L \leq 100,$$

dans lequel les carcasses de rail (10) sur le noeud de retour sont réalisées avec une section inclinée, responsable de l'inclinaison de la carrosserie dans la direction transversale selon un angle $\gamma$, °, dans les limites : $45 \leq \gamma \leq 120$.

2. Complexe de transport selon la revendication 1, *caractérisé en ce que* des forces agissant sur la carrosserie pendant son déplacement présentent une force totale, orientée vers la tangente aux surfaces de roulement (E) de carcasses de rail (10) dans la section transversale de la structure de voie selon un angle $\alpha$, °, dans les limites :

$$0 \leq \alpha \leq 85$$

3. Complexe de transport selon la revendication 1, *caractérisé en ce que* la zone de déchargement (B) est située sur une section en pente du noeud de retour de la structure de voie.

4. Complexe de transport selon la revendication 1, *caractérisé en ce que* devant la zone de déchargement, des carcasses de rail (10) sont réalisées avec une contre-pente dans une direction, opposée au vecteur de déchargement, selon un angle $\beta$, °, dans des limites :

$$5 \leq \beta \leq 30$$

5. Complexe de transport selon la revendication 1, *caractérisé en ce que* la poutre porteuse (20) représente un arbre d'essieu monté.

6. Complexe de transport selon la revendication 1, *caractérisé en ce que* la partie de bande porteuse (5) est réalisée multicouche.

7. Complexe de transport selon l'une quelconque des revendications 1 et 6, *caractérisé en ce qu'*au moins une couche de partie de bande porteuse (5) est équipée d'éléments de renfort.

8. Complexe de transport selon l'une quelconque des revendications 1, 6 et 7, *caractérisé en ce qu'*au moins, du côté de la surface de chargement de la partie de bande porteuse (5), du moins, une de ses couches avec des éléments de renfort est réalisée sous forme de garniture d'amortissement.

9. Complexe de transport selon la revendication 1, *caractérisé en ce que* l'organe porte-charge positionné longitudinalement (11) de la carrosserie est réalisé sous forme d'éléments porte-charge positionnés longitudinalement, reliés transversalement les uns aux autres.

10. Complexe de transport selon l'une quelconque des revendications 1, 6, 7 et 9, *caractérisé en ce que* des éléments porte-charge sont positionnés au moins dans une couche de la partie de bande porteuse (5) en tant qu'éléments de renfort.

11. Complexe de transport selon la revendication 1, *caractérisé en ce que* les roues (8) présentent un profil à double boudin ou un profil à simple boudin.

12. Complexe de transport selon la revendication 1, *caractérisé en ce que* le mécanisme d'entraînement (4) est réalisé sous forme d'un châssis porteur sur lequel est installée une unité d'entraînement.

13. Complexe de transport selon la revendication 12, *caractérisé en ce que* l'unité d'entraînement est équipée d'un dispositif d'entraînement (17) sur lequel sont installés des crochets de traction, configurés pour ajuster la force d'entraînement.

14. Complexe de transport selon la revendication 1, *caractérisé en ce qu'*un boîtier de protection est fixé au-dessus de la structure de voie (2).

Fig.1

Fig.2

Fig. 3

Fig.4

Fig. 5

Fig.6

Fig. 7

Fig.8

Fig. 9

Fig. 10

Fig. 11

Fig. 12

Fig.13

Fig.14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013118371 A1

**Non-patent literature cited in the description**

- **POLUNIN V.T. ; GULENKO G.N.** Conveyors for mining enterprises. *Nedra,* 1978, 62-63

- **SPIVAKOVSKIY A.O. ; DYACHKOV V.K.** Transporting machines. *Mashinostroenie,* 1983, 158-159